# EUROPÄISCHE PATENTSCHRIFT

(11) **EP 0 733 321 B1**
(45) Veröffentlichungstag und Bekanntmachung des Hinweises auf die Patenterteilung: **24.06.1998**
(21) Anmeldenummer: 96102677.0
(22) Anmeldetag: 22.02.1996
(51) Int. Cl.: A47B 21/00, F16L 3/26, H02G 3/04

(54) **Haltevorrichtung für eine unter einem Tisch oder dergleichen zu befestigende Tragwanne**
Holding device for a tray to be fixed underneath a table or the like
Dispositif de support pour un insert de soutien à fixer sous une table ou similaire

(30) Priorität: 24.03.1995 DE 29505055 U
(43) Veröffentlichungstag der Anmeldung: 25.09.1996
(73) Patentinhaber: Eggersmann GmbH + Co. KG, 32339 Espelkamp (DE)
(72) Erfinder: Schnake, Christoph, 32312 Lübbecke (DE)
(74) Vertreter: Fischer, Matthias, Dipl.-Ing.

(56) Entgegenhaltungen:
- EP-A- 0 399 790
- DE-A- 3 008 510
- FR-A- 2 669 708

## Beschreibung

Die vorliegende Erfindung betrifft eine Haltevorrichtung zur Abhängung unter einer Decke, Tischplatte oder dergleichen gemäß Anspruch 1.

Es werden für verschiedenste Zwecke Halterungen für Versorgungsleitungen aller Art eingesetzt, die ein ordnungsgemäßes Unterbringen von Versorgungsleitungen gewährleisten sollen. Unter Versorgungsleitungen werden elektrische Kabel, Schläuche für den Fluidtransport für Druckluft oder hydraulische Anlagen, Datenübertragungsleitungen, Gasleitungen und dergleichen verstanden, die für eine mehr oder weniger konstante Verlegung installiert werden. Im folgenden werden die genannten Versorgungsleitungen der Einfachheit halber nur noch mit "Leitungen" bezeichnet.

Zwar wird eine vorgenannte Verlegung von Leitungen im Prinzip für eine längere Dauer in der Regel geplant, es kommt jedoch immer wieder vor, daß am Leitungssystem Änderungen oder Reparaturen oder auch Erweiterungen vorgenommen werden müssen, so daß die Halterungen für die Leitungen einfach und ohne große Umstände zugänglich sein sollen. Hierzu sollen möglichst wenig Teile entfernt werden müssen und eine Zugänglichkeit zu den Leitungen möglichst schnell und einfach erreicht werden können. Für die Verlegung von Leitungen speziell unter Decken oder Platten, die in der Regel horizontal verlaufen, werden u.a. kanalähnliche Kabelschächte in der Form eines auf dem Kopf stehenden U eingesetzt, die an der jeweiligen Decke angeschraubt werden. Diese Kanäle haben in ihrem Inneren Halterungen für Leitungen, in denen die Leitungen eingehängt werden. Danach werden die Kanäle in der Regel von unten mit aufschraub- oder aufschnappbaren Deckeln verschlossen. Diese ziemlich aufwendige Verlegung von Leitungen verursacht bei Reparaturen oder Änderungen umfangreiche Vorbereitungsmaßnahmen zum Öffnen der Kanäle, bevor die eigentliche Reparatur oder Veränderung begonnen werden kann.

Für Leitungsverlegungen unter Tischen wurde beispielsweise zur Vereinfachung der Zugänglichkeit zu den Leitungen, die in relativ zum Tisch fest installierten Wannen verlegt sind, eine Beweglichkeit der Tischplatte vorgesehen, so daß die Tischplatte zum Öffnen der Leitungswanne horizontal verschoben werden kann, damit die Leitungen von oben zugänglich sind. Analog könnte auch ein waagerecht verschiebbarer oben offener Kabel vorgesehen werden, um einen von oben möglichen Zugang zu den Leitungen zu schaffen. Es sind auch andere derartige Vorrichtungen bekannt, bei denen beispielsweise eine Tischplatte um eine Verschwenkvorrichtung gekippt wird, um Zugang zu den Leitungen erhalten.

Aus dem deutschen Gebrauchsmuster G 93 13 748.6 ist eine Untertischwanne für Schreibtische bekannt, mit einem Trog, einer Anhängevorrichtung und einer Griffleiste, wobei der Trog mit der Anhängevorrichtung lose auf ein unterhalb einer Platte befindliches Rohr oder auf Zapfen aufsetzbar und an der Griffleiste in einer etwa waagerechten Stellung verrast-oder verriegelbar ist. Der Vorteil dieser Untertischwanne gegenüber den zuvor beschriebenen Vorrichtungen ist der, daß die Tischplatte als solche, um Zugang zu den Leitungen zu erhalten, nicht geräumt werden muß. Ein großer Nachteil der zuletzt genannten aus dem Gebrauchsmuster bekannten Vorrichtung ist jedoch, daß beim Öffnen, d.h. einseitigen Absetzen des Troges sich der, für die Leitungen vorgesehenen Boden, des Troges neigt und diese seitlich aus der Untertischwanne herausfallen bzw. heraushängen, wenn die Untertischwanne geöffnet wird. Sollte sich außerdem der Trog der Untertischwanne unkontrolliert öffnen, so ist es möglich, daß eine Person, die sich an den betreffenden Schreibtisch setzen will oder bereits dort sitzt, gegen den Trog stoßen kann und sich dabei verletzen kann, da der Trog in keiner Richtung ausweichen kann. Für die Sicherung des genannten Troges ist gemäß der Beschreibung des Gebrauchsmusters eine relativ aufwendige Verriegelung vorgesehen. Da die meisten eingesetzten Schreibtische in der Regel Haltevorrichtungen für Leitungen haben, die sehr aufwendig und teuer sind, besonders unter dem Aspekt, daß die Zugänglichkeit für die Leitungen wohl gefordert ist, jedoch in der Regel nicht sehr häufig benutzt wird, ist der Aufwand, der für Untertischmontage von Leitungen getrieben wird, nicht gerechtfertigt.

Es ergibt sich somit die Aufgabe, eine Haltevorrichtung zur Abhängung von Leitungen unter einer Decke oder einer Tischplatte zu finden, bei der die Nachteile aus dem Stand der Technik ganz oder teilweise vermieden werden.

Eine Lösung des Problems besteht in einer Haltevorrichtung gemäß Anspruch 1. Diese hat eine sich längs erstreckende Tragwanne mit einem Boden und mindestens zwei Tragebügel, wobei die Tragebügel zwei Schenkelstäbe und einen dazwischen liegenden Grundstab aufweisen, welche gegeneinander in Form eines U gebogen sind, wobei die Tragwanne im Boden jeweils auf einer quer zu länglichen Erstreckung der Tragwanne gedachten Linie liegende Durchbrüche für die mindestens zwei Tragbügel aufweist, deren Schenkelstäbe sich durch die Durchbrüche erstrecken, so daß der Grundstab an der unteren Außenseite des Bodens der Tragwanne anliegen kann, wobei die Enden der Schenkelstäbe (Bügelköpfe) mit einer Befestigungseinrichtung versehen sind. Diese sehr einfache Version einer Haltevorrichtung ermöglicht einerseits, abhängig von der Länge der Schenkelstäbe der Tragebügel, eine dauernde Zugänglichkeit der Leitungen, die beispielsweise zwischen den Schenkelstäben verlegt sind. Sie ist unterhalb einer Decke oder eines Tisches angebracht, nicht störend im Weg, wenn ein Gegenstand von unten dagegen stößt, da die als Kabelkanal dienende Tragwanne für Leitungen nach oben ausweichen kann. Die sich durch Öffnungen im Boden erstreckenden Schenkelstäbe sind die einzigen Gegenstände, die eventuell noch im Weg stehen könnten.

In einer vorteilhaften Weiterbildung der Erfindung sind auch diese Schenkelstäbe nicht mehr störend im Weg, da deren Bügelköpfe mit scharnierartigen Gelenkteilen versehen sind, so daß sie um ihre Befestigung an der Decke oder Unterseite der Tischplatte schwenkbar angebracht sind, um im Falle einer Kollision mit einem anderen Gegenstand ausweichen und dabei Verletzungen vermeiden zu können.

In einer weiteren vorteilhaften Ausführungsform der Erfindung ist die Haltevorrichtung so gestaltet, daß der Boden in der Nähe der Längsseiten der Tragwanne etwa parallel dazu verlaufende längliche Vertiefungen aufweist, wobei die Vertiefungen im Bereich der unteren Oberfläche des Bodens wenigstens jeweils einen die Vertiefung teilweise abdeckenden Rastvorsprung aufweisen, und wobei die Schenkelstäbe - gesehen in Flucht und einander überdeckend - etwa in Figur eines etwas gestreckten Z geknickt sind. Damit können folgende weitere Vorteile genutzt werden. Der besondere Vorteil dieser Ausgestaltung liegt darin, daß die Haltevorrichtung, wie zuvor beschrieben, eingesetzt werden kann, so daß der Boden auf den Grundstäben liegend, nach oben nachgebend aufgehängt werden kann, daß aber der Boden der Tragwanne in einer höheren Position, die näher an der Tischplatte oder Decke liegt, festgelegt werden kann, indem die Tragwanne nach oben gehoben wird, während sich die an der Decke oder Tischplatte schwenkbar befestigten Schenkelstäbe durch in der Tragwanne angebrachte zweckmäßige Öffnungen nach unten erstrecken, bis die geknickten Schenkelstäbe sich so verdrehen lassen, daß ein Teil der Schenkelstäbe sich unter den Boden der Tragwanne verschwenken läßt, dabei in den Vertiefungen verschwindet und hinter den entsprechenden Rastvorsprüngen einrastet. Diese Verstellung bzw. dieses Verschließen der Haltevorrichtung ist ohne Werkzeug durchführbar und räumt die Haltevorrichtung bzw. deren Tragwanne und deren Tragbügel vollständig auf. Eine weitere Ausweichmöglichkeit ist in diesem Fall nicht mehr notwendig, da die Tragwanne nun in der Regel außerhalb jeglicher Kollisionsmöglichkeiten auf engstem Raum aufgeräumt ist.

Weitere Vorteile der Erfindung ergeben sich aus den Unteransprüchen und der folgenden Beschreibung.

Ausführungsbeispiele der Erfindung sind im folgenden unter Bezugnahme auf die Zeichnungen kurz beschrieben.
- Fig. 1: zeigt ein Beispiel einer erfindungsgemäßen Vorrichtung in perspektivischer Ansicht.
- Fig. 2 und 3: zeigen Teilansichten der in Figur 1 gezeigten Vorrichtung teilweise im Schnitt.
- Fig. 4: zeigt ein weiteres Ausführungsbeispiel der Erfindung, wobei die Tragwanne abgesenkt und (gestrichelt) ausschnittsweise gehoben dargestellt ist.
- Fig. 5: zeigt die in Figur 4 gezeigte Vorrichtung in gehobener Stellung, wobei die Tragwanne teilweise geschnitten dargestellt ist.
- Fig. 6: zeigt einen erfindungsgemäßen Tragebügel mit etwa Z-förmig geknickten Schenkelstäben.
- Fig. 7: zeigt im Schnitt einen Teil der Tragwanne im Bereich der erfindungsgemäßen Vertiefung, wobei auf der rechten Seite der Tragebügel weggelassen worden ist.
- Fig. 8: zeigt die Gegenstände von Fig. 7 in gebrochen dargestellter Draufsicht.

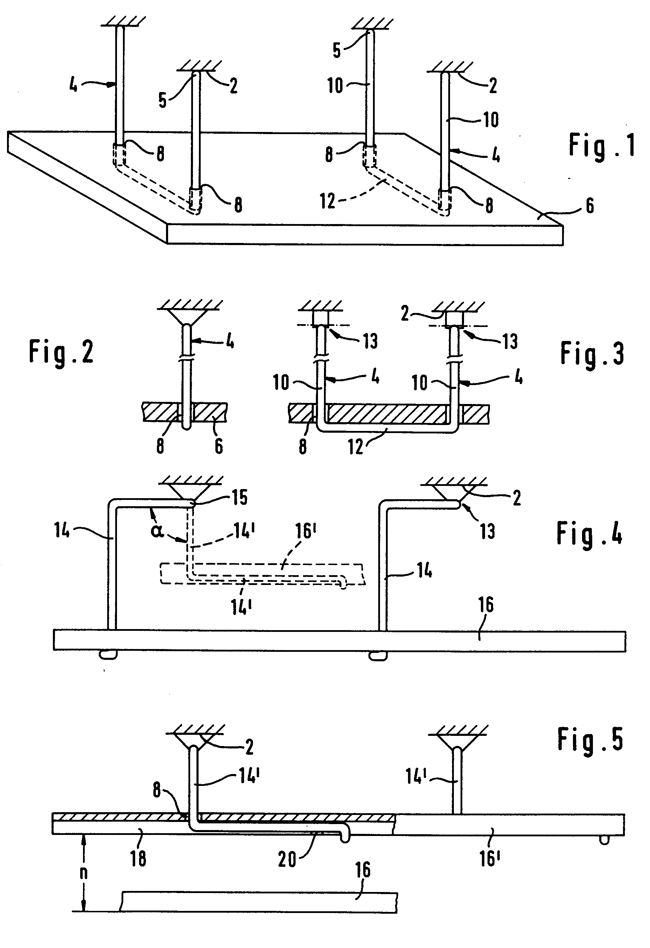

In Fig. 1 ist mit dem Bezugszeichen 2 schematisch ein Befestigungspunkt einer erfindungsgemäßen Haltevorrichtung als Sinnbild für eine Decke oder eine Tischplatte markiert. An den Punkten 2 sind in dieser Darstellung zwei Tragebügel 4 mit ihren Bügelköpfen 5 befestigt. Die Tragebügel 4 haben je zwei Schenkelstäbe 10 und einen dazwischen befindlichen Grundstab 12. Die etwa parallel angeordneten Schenkelstäbe 10 erstrecken sich durch Durchbrüche 8 der Tragwanne 6 von unten nach oben, wobei der Grundstab 12 etwa an der Unterseite der Tragwanne 6 anliegt und diese in Position hält, so daß sie von einer Decke/Tischplatte 2 abgehängt angeordnet ist.

Die Figuren 2 und 3 zeigen Schnittdarstellungen der in Figur 1 gezeigten Vorrichtung. Figur 2 zeigt die erfindungsgemäße Haltevorrichtung in der Position, in der die beiden Schenkelstäbe hintereinander liegen und einander überdecken. Figur 3 zeigt dieselbe Vorrichtung von der Seite. Hier ist auch mit den Bezugszeichen 13 ein Gelenkübergang zwischen der Befestigung der erfindungsgemäßen Haltevorrichtung an der Decke 2 und dem Schenkelstab 4 angedeutet.

Figur 4 zeigt ein weiteres Ausführungsbeispiel der Erfindung. Bei dieser Ausführungsform sind die Schenkelstäbe der Tragebügel 14 etwa in der Form eines gestreckten Z geknickt. Wie aus der Figur zu erkennen ist, beträgt der Knickwinkel hier ungeführ 90°. Die Tragebügel 14 sind mit ihren Bügelköpfen 15 über Gelenke 13 an einer Decke/Tischplatte 2 und/oder schwenkbar befestigt. Diese Befestigung der Schenkelstäbe folgt nach dem Durchstecken der Bügelköpfe 15 der Tragebügel 14 durch die Durchbrüche 8 der Tragwanne 16. Ist nun die Tragwanne 16 entsprechend unter einer Decke/Tischplatte aufgehängt, so kann durch Drehen der Tragebügel 14 um den in Figur 4 dargestellten Winkel α gegen den Uhrzeigersinn gedreht werden und der längere Teil eines nun mit 14' bezeichneten Tragebügels in eine in Figur 5 gezeigte Vertiefung 18 der Tragwanne 16' eintauchen, so daß sich die Position des Tragebügels 14' gemäß Figur 5 ergibt. In diesem Zustand ist der Tragebügel 14' hinter einem Rastvorsprung 20 der Tragwanne 16' eingerastet und hält aufgrund der Hebelgeometrie die Tragwanne 16' problemlos in einer um die Strecke n höheren Position. Es ist nach dieser Beschreibung gut zu erkennen, daß dieses Heben und Senken der Tragwanne 16 vollkommen ohne Werkzeug durchgeführt werden kann. Auch ein Kippen oder Abstürzen der Tragwanne oder darin befindlicher Leitungen ist unmöglich. Die hier gezeigten Darstellungen sind natürlich nur Abschnitte von Haltevorrichtungen. Man kann sich die in den Figuren 1, 4 und 5 gezeigten Abschnitte in beliebiger Reihe nach der einen oder anderen Seite verlängert vorstellen, um zu einer Haltevorrichtung für Leitungen zu kommen, die die gewünschte Länge, beispielsweise die Breite eines Schreibtisches hat.

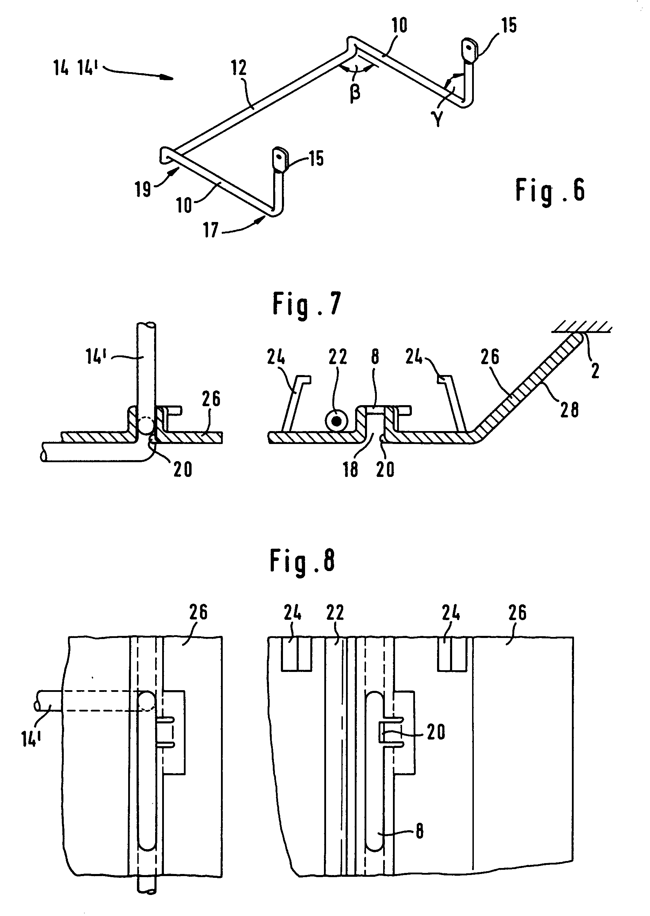

Figur 6 zeigt einen Tragebügel 14, 14' mit Schenkelstäben 10 und Grundstab 12, die um Winkel β und geknickt sind, wobei hier ein Knickwinkel von ungefähr 90° gewählt worden ist. Die Enden der Schenkelstäbe 10 sind hier als Bügelköpfe 15 dargestellt, die ihrerseits wiederum Teile von scharnierartigen Gelenkteilen bilden. Das (nicht gezeigte) Gegenstück wird mit bekannten Mitteln an der Decke oder der Unterseite der Tischplatte befestigt und über eine (nicht gezeigte) Gelenkachse mit dem Tragebügel 14 verbunden. Einzelheiten dieser Befestigungsvorrichtungen werden hier nicht im Detail beschrieben, da sie dem Fachmann hinreichend bekannt sind.

In den Figuren 7 und 8 ist in Schnitt und Draufsicht eine weitere Ausführungsform einer Tragwanne 26 gezeigt, die beispielsweise als Extrusions- oder Strangpreßprofil aus Kunststoff oder Aluminium oder auch als Spritzgußteil hergestellt sein kann. Hierbei ist jeweils auf der linken Seite der Figur ein Tragebügel 14' in der Stellung gezeigt, in der die Tragewanne 26 sich in gehobener Stellung befindet. Hierbei kann die Tragewanne 26 so nahe an die Decke/Tischplatte 2 gerückt werden, daß sie mit einer auf der rechten Seite dargestellten, vorteilhafterweise zusätzlich am Tragewannenprofil angebrachten Seitenwand 28 mit der Decke/Tischplatte 2 abschließt.

Man kann sich nach der Darstellung von Figur 7 gut vorstellen, daß der Tragebügel 14, 14' aus der unteren Position durch den Durchbruch 8 nach oben verschoben wird und beim Drehen um einen Gelenkpunkt 15 mit einem Teil der Schenkelstäbe 10 an einem elastisch angebrachten Rastvorsprung 20 vorbeigleiten muß, um in der hier dargestellten Endposition befestigt zu werden. Das Zurückrasten des Rastvorsprungs 20 in die gezeigte Position verhindert ein sich Zurückbewegen des Tragebügels 14', da das Hauptgewicht der Tragwanne 16, 26 an der in Figur 6 mit 17 bezeichneten Stelle des Tragbügels 14, 14' lastet, während der Rastvorsprung 20 den Tragebügel 14' etwa an der in Figur 6 mit 19 bezeichneten Stelle des Tragbügels 14' angreift.

Zur Befestigung von Kopplungseinrichtungen, Steckdosen, Ventilen oder sonstigen Armaturen, die beim Verlegen von Leitungen eingesetzt werden können, sind zweckmäßige Befestigungsschienen 24 vorgesehen. Diese können sich entlang der gesamten Tragwanne 26 oder auch nur über gewisse Langenbereiche erstrecken. Die Position und Gestalt der Befestigungsschienen 24 ist hier nur beispielhaft gezeigt. Je nach Anwendung ist hier auch eine andere Gestaltung möglich. Beispielhaft für eine Leitung ist hier ein verlegtes Koaxialkabel 22 gezeigt, wobei jedoch der gesamte Bereich, wie er gemäß Figur 7 von einer Decke/Tischplatte 2 und dem Boden einer Tragwanne 26 umfaßt wird, zur Aufnahme von Leitungen zur Verfügung steht.

Die in den Figuren 7 und 8 gezeigte Konfiguration der Tragwanne 26 und der darin vorgesehenen Vertiefungen 18 - es versteht sich von selbst, daß in den Figuren 7 und 8 nur eine Seite einer erfindungsgemäßen Tragwanne gezeigt ist - ist keinesfalls auf die dargestellte Geometrie beschränkt. Dabei sind sämtliche im Schutzumfang der Ansprüche enthaltenen Variationen denkbar. Ebenso denkbar ist eine nicht nur sich geradlinig erstreckende Gestaltung der Tragwanne, sondern eine sich entsprechend einer heute manchmal gewählten winkligen Aneinanderreihung von Schreibtischen folgenden Figuration von Tragwannen denkbar. Hierbei kann, wie auch bei der geradlinigen Anordnung von Tragwannen, das Heben und Senken einzelner Elemente einzeln vorgesehen werden. Es ist jedoch auch nach einer Verbindung einzelner Tragwannensegmente das Heben und Senken des gesamten Bauteils denkbar.

Während sich für den Tragebügel in der Regel Stahl als Material empfiehlt, kann für die Tragwanne eine zweckmäßige Kunststoffverbindung, u.a. auch glasfaserverstärkter Kunststoff oder auch Strangpreßprofil aus Aluminium oder dergleichen, vorgesehen werden. Dies richtet sich im einzelnen nach den Belastungszuständen, die zu erwarten sind oder sonstigen Design wünschen.

## Patentansprüche

1. Haltevorrichtung zur Abhängung unter einer Decke oder einer Tischplatte mit einer Aufnahme insbesondere für Kabel oder dergleichen mit folgenden Merkmalen:
a) eine sich längs erstreckende Tragwanne (6, 16) mit einem Boden,
b) mindestens zwei Tragebügel (4, 14),
**dadurch gekennzeichnet**, daß
c) die Tragebügel (4,14) zwei Schenkelstäbe (10) und einen dazwischenliegenden Grundstab (12) aufweisen, welche gegeneinander in Form eines U gebogen sind,
d) die Tragwanne (6) im Boden jeweils auf einer quer zur länglichen Erstreckung der Tragwanne (6) gedachten Linie liegende Durchbrüche (8) für die mindestens zwei Tragbügel (4) aufweist, deren Schenkelstäbe (10) sich durch die Durchbrüche (8) erstrecken, so daß der Grundstab (12) an der unteren Außenseite des Bodens der Tragwanne (6) anliegen kann,
e) wobei die Enden der Schenkelstäbe mit einer Befestigungseinrichtung versehen sind.

2. Vorrichtung nach Anspruch 1, **dadurch gekennzeichnet**, daß die Befestigungseinrichtung der die Enden der Schenkelstäbe bildenden Bügelköpfe (5) zwei gegeneinander bewegbare scharnierartige Gelenkteile aufweist.

3. Vorrichtung nach Anspruch 2, **dadurch gekennzeichnet**, daß der Boden in der Nähe der Längsseiten der Tragwanne (6, 16) etwa parallel dazu verlaufende längliche Vertiefungen (18) aufweist, wobei die Vertiefungen (18) im Bereich der unteren Oberfläche des Bodens wenigstens jeweils einen die Vertiefungen (18) teilweise abdeckenden Rastvorsprung (20) aufweisen, und daß die Schenkelstäbe (10) - gesehen in Flucht und einander überdeckend - etwa in Figur eines etwas gestreckten Z geknickt sind.

4. Vorrichtung nach Anspruch 3, **dadurch gekennzeichnet**, daß die Schenkelstäbe (10) jeweils um etwa 90° geknickt sind.

5. Vorrichtung nach einem der vorhergehenden Ansprüche, **dadurch gekennzeichnet**, daß die Tragwanne (6, 16) Vorrichtungen zur Befestigung von weiteren Bauteilen aufweist.

6. Vorrichtung nach einem der vorhergehenden Ansprüche, **dadurch gekennzeichnet**, daß die Tragwanne (6, 16) mit Kopplungseinrichtungen für Kabel und dergleichen ausrüstbar und/oder ausgerüstet ist.

7. Vorrichtung nach einem der vorhergehenden Ansprüche, **dadurch gekennzeichnet**, daß die Tragwanne (6, 16) im wesentlichen aus Kunststoff geformt ist.

8. Vorrichtung nach einem der Ansprüche 1 bis 6, **dadurch gekennzeichnet**, daß die Tragwanne (16) im wesentlichen aus Strangpreßprofil besteht.

9. Vorrichtung nach einem der vorhergehenden Ansprüche, **dadurch gekennzeichnet**, daß die Tragwanne (16) sich in Längsrichtung ersteckende Seitenwände (28) aufweist.

## Claims

1. A holding devise for suspension under a soffit or a table top including a mount more particularly for cables or the like including the following features:
a) an elongated supporting tray (6,16) with a bottom
b) at least two supporting brackets (4, 14)
**characterized in that**
c) said supporting brackets (4, 14) comprise two leg bars (10) and a base bar (12) inbetween which are bent U-shaped relative to each other,
d) said supporting tray (6) comprises in its bottom openings (8) each located on an imaginary line transverse to the elongation of said supporting tray (6) for said at least two supporting brackets (4), the leg bars (10) of which extend through said openings (8) so that said base bar (12) may come into contact with the underside of said bottom of said supporting tray (6),
e) the ends of said leg bars (10) being provided with a fastener means.

2. The device as set forth in claim 1, characterized in that said fastener means of the bracket heads (5) forming the ends of said leg bars comprises two hinge-type articulated parts movable relative to each other.

3. The device as set forth in claim 2, characterized in that said bottom comprises elongated depressions (18) in the vicinity of the longitudinal sides of said supporting tray (6,16) oriented more or less parallel thereto, said depressions (18) comprising in the region of the underside of said bottom at least one latching protuberance (20) partly covering one of said depressions (18) in each case and in that said leg bars (10) - as viewed coinciding in line - are angled roughly figured as a somewhat extended Z.

4. The device as set forth in claim 3, characterized in that said leg bars (10) are each angled by approximately 90°.

5. The device as set forth in any of the preceding claims, characterized in that said supporting tray (6,16) comprises devices for securing further components.

6. The device as set forth in any of the preceding claims, characterized in that said supporting tray (6,16) may be and/or is equipped with means for coupling cables and the like.

7. The device as set forth in any of the preceding claims, characterized in that said supporting tray (6,16) is formed substantially of a plastics material.

8. The device as set forth in any of the claims 1 to 6, characterized in that said supporting tray (16) consists substantially of an extruded profile section.

9. The device as set forth in any of the preceding claims, characterized in that said supporting tray (16) comprises side walls (28) extending in the longitudinal direction.

## Revendications

1. Dispositif de support à suspendre sous un plafond ou un plateau de table comportant un dispositif de réception, notamment pour des câbles ou éléments semblables, présentant les caractéristiques suivantes :
a) un insert de soutien (6, 16) s'étendant en direction longitudinale, présentant un fond,
b) au moins deux étriers de support (4, 14),
**caractérisé en ce que**
c) les étriers de support (4, 14) présentent deux barres en forme de branches (10) et une barre de base (12) située entre elles qui sont réciproquement courbées en forme de U,
d) l'insert de soutien (6) présentant des perforations (8) situées dans le fond sur une ligne idéelle qui est transversale par rapport a l'extension longitudinale de l'insert de soutien (6) pour les étriers de support (4) qui sont au moins au nombre de deux, dont les barres en forme de branches (10) s'étendent à travers les perforations (8) de sorte que la barre de base (12) peut reposer contre le côté extérieur inférieur du fond de l'insert de soutien (6),
e) les extrémités des barres en forme de branches étant pourvues d'un dispositif de fixation.

2. Dispositif selon la revendication 1, caractérisé en ce que le dispositif de fixation des têtes d'étrier (5) formant les extrémités des barres en forme de branches présente des pièces articulées à la manière de charnières pouvant être déplacées réciproquement.

3. Dispositif selon la revendication 2, caractérisé en ce que le fond à proximité des côtés longs de l'insert de soutien (6, 16) présente des renfoncements (18) allongés s'étendant approximativement en parallèle aux côtés longs, les renfoncements (18) dans la zone de la surface inférieure du fond présentant chacun au moins une projection d'encliquetage (20) qui recouvre partiellement les renfoncements (18), et que les barres en forme de branches (10) vues en alignement et chevauchantes - sont courbées en forme d'un Z un peu allongé.

4. Dispositif selon la revendication 3, caractérisé en ce que les barres en forme de branches (10) sont courbées à environ 90°.

5. Dispositif selon l'une quelconque des revendications précédentes, caractérisé en ce que l'insert de soutien (6, 16) présente des dispositifs pour la fixation de composants supplémentaires.

6. Dispositif selon l'une quelconque des revendications précédentes, caractérisé en ce que l'insert de soutien (6, 16) peut être équipé et/ou est équipé de dispositifs de connexion pour câbles ou éléments semblables.

7. Dispositif selon l'une quelconque des revendications précédentes, caractérisé en ce que l'insert de soutien (6, 16) est formé essentiellement en plastique.

8. Dispositif selon l'une quelconque des revendications 1 à 6, caractérisé en ce que l'insert de soutien (16) consiste essentiellement en un profilé embouti.

9. Dispositif selon l'une quelconque des revendications précédentes, caractérisé en ce que l'insert de soutien (16) présente des parois latérales (28) s'étendant en direction longitudinale.
